# EUROPEAN PATENT APPLICATION

(11) **EP 3 090 905 A1**
(43) Date of publication of application: **09.11.2016**
(21) Application number: 14857148.2
(22) Date of filing: 16.06.2014
(51) Int. Cl.: B60S 5/06

(54) **AUTOMATIC GROUP OPTIMIZATION SYSTEM FOR POWER BATTERY BOXES IN ELECTRIC VEHICLE BATTERY SWAP STATIONS, AND OPERATION METHOD THEREFOR**

(30) Priority: 28.10.2013 CN 201310516828
(71) Applicant: State Grid Corporation of China, Beijing 100031 (CN); Electric Power Research Institute of State Grid Shandong Electric Power Company, Shandong 250002 (CN); Shandong Luneng Intelligence Technology Co., Ltd, Ji'nan, Shandong 250101 (CN)
(72) Inventor: LI, Jianxiang, Jinan Shandong 250101 (CN); LIU, Haibo, Jinan Shandong 250101 (CN); YUAN, Hong, Jinan Shandong 250101 (CN); ZHANG, Bingliang, Jinan Shandong 250101 (CN); HAN, Yuankai, Jinan Shandong 250101 (CN); WEI, Wei, Jinan Shandong 250101 (CN)
(74) Representative: ZHAOffice SPRL
(86) International application number: PCT/CN2014/079920
(87) International publication number: WO 2015/062282

(57) **Abstract**

The present invention relates to an automatic power battery pack grouping optimization system for an electric vehicle battery swap station and a working method of such a system. The system comprises a power battery information real-time processing module for acquiring information of battery packs removed from an electric vehicle in real time, and transmitting, parsing and storing the acquired information, a grouping strategy library configuration module for providing a grouping strategy configuration entry to a power battery pack grouping automatic-optimization scheduling module, a battery grouping information database for receiving a query from the power battery pack grouping automatic-optimization scheduling module and altering grouping information of power batteries, and the power battery pack grouping automatic-optimization scheduling module for receiving a battery swapping command, obtaining a grouping strategy and calculated priorities, and altering the existing grouping information not satisfying the grouping strategy according to the requirements of the grouping strategy. The automatic power battery pack grouping optimization system for the electric vehicle battery swap station dynamically adjusts the grouping information of battery packs by reasonably configuring the battery pack grouping strategy, and thus solves the problem of shutdown of the whole group of batteries due to the change of individual performance and increases the utilization rate of power batteries.

## Description

### Field of the Invention

The present invention relates to an automatic power battery pack grouping optimization system for an electric vehicle battery swap station and a working method of such a system. Specifically, on the basis of acquired real-time battery data and according to a preset grouping optimization strategy, automatic optimization and matching are performed in grouping battery packs when batteries of a vehicle are swapped in the electric vehicle battery swap station.

### Background of the Invention

In order to ensure the power of an electric vehicle and convenience in battery swapping operation process thereof, the whole power of each electric vehicle is supplied by providing a plurality of battery packs matched with one another at present. The power battery packs taking part in matching are connected in series to externally provide electric energy. It needs to keep consistent equilibrium of power batteries in each power battery pack taking part in matching so as to ensure the service life of the power batteries.

In the current battery swapping process, power battery packs are grouped substantially via the following process: before each power battery pack is put into operation, an equilibrium test is carried out to the power battery pack; according to the requirement on the quantity of grouping, several battery packs having better equilibrium are selected and matched into a group; such a matching relation will not vary in the subsequent operation process. During the battery swapping operation, the group of power battery packs that have been charged completely is selected by the battery swapping scheduler as the group of batteries for battery swap, and delivered to a power battery pack swapping apparatus for the battery swapping operation. If there are a plurality of groups of power battery packs that have been charged completely, in this case, the selection of one group of battery packs is completely random by the scheduler or depends on the scheduler's memory of battery performance.

At present, such a manner of fixed grouping is unable to solve the problem of slowly deteriorating consistency of battery packs originally having good consistency in the operation process; meanwhile, the groups of batteries for battery swap are completely selected by the schedulers according to their own subjective judgments without support of actual performance data of batteries. Therefore, it's not a scientific scheduling scheme and not good for maintaining high performance of power batteries. For grouping power battery packs of an electric vehicle currently, the manner adopted is fixedly grouping battery packs after they are put into operation, and shutting down the whole group of battery packs completely for adjustment when the performance of one single battery pack in the group degrades to have inconsistent equilibrium with batteries in other packs. This manner often results in shutdown of more packs of batteries in the group of battery packs due to the problem of a single pack of batteries, and is adverse to circulation of batteries. Additionally, when selecting battery packs taking part in grouping for battery swap, the judgment of a scheduler on whether batteries are charged completely is used as the only basis at present, and there lacks comprehensive judgment on data such as times of batteries taking part in battery swap, equilibrium, charging completion time, battery charge capability and the like. As a result, it not only results in increase of the workload of the battery swapping scheduler, but also is adverse to scientific battery swapping scheduling.

It is found in prior art document search that Nari Technology Co., Ltd. of National Power Cooperation has provided a battery swapping system and method for an electric vehicle battery swap station (Chinese Patent Application No. 201110053284.7), whereas this document only provides the method of swapping batteries without consideration to grouping and optimization methods of battery packs.

Beijing University of Posts and Telecommunications has provided a fast battery swap station for battery packs of an electric vehicle and a battery pack swapping method thereof (Chinese Patent Application No. 201110108537.6), wherein this document only provides a flow and method for replacing a chassis of batteries and does not involve with a method related to battery pack grouping.

Xuji Group Corporation has provided a full-automatic battery swapping process control method for a charging and battery swap station (Chinese Patent Application No. 201210141795.9). This document provides a control method for the whole process of a charging and battery swap station, where an automatic recommendation rule that a monitoring system recommends a battery group meeting the requirements of battery swap is described, i.e., selecting the battery group under the premise that battery packs are fixedly grouped in advance, whereas it is not described that battery packs of the whole station are dynamically grouped or adjusted according to an optimization principle. As a result, the performance equilibrium of battery packs in the group matched in advance cannot be guaranteed; besides, it fails in solving the problem that the whole group of battery packs needs to be shut down for maintenance when the performance of one single battery pack degrades to have inconsistent equilibrium with batteries in other packs, and thus is adverse to circulation of batteries.

In a word, a current technical problem urgent to be solved by a person skilled in the art is how to optimize grouping of battery packs of the whole station according to a certain principle, dynamically adjust grouping of battery packs and ensure consistent performance of battery packs in the group.

### Summary of the Invention

Aiming at the above disadvantages, the present invention provides an automatic power battery pack grouping optimization system for an electric vehicle battery swap station and a working method of such a system. This provided system has the advantages of scientificity and reduction of working strength of a scheduler. Specifically, battery grouping information is dynamically adjusted according to operation data; meanwhile, according to a grouping optimization strategy, a group of batteries having the optimum equilibrium consistency is automatically selected by a computer during the battery swapping operation.

In order to achieve the above objects, the present invention employs the following technical solutions:
An automatic power battery pack grouping optimization system for an electric vehicle battery swap station comprises a power battery information real-time processing module for acquiring information of a battery group removed from an electric vehicle in real time, and transmitting, analyzing and storing the acquired information to an operation data database, a grouping strategy library configuration module for selecting one or more of optimum grouping strategies for permutation and combination for use by a power battery pack grouping automatic-optimization scheduling module, providing a grouping strategy configuration entry to the power battery pack grouping automatic-optimization scheduling module, providing a grouping strategy customizing interface and providing a priority altering interface for the optimum grouping strategies joining in scheduling, as well as completing configuration of grouping strategies and adjustment of priorities, a battery grouping information database for recording grouping information of power battery packs, receiving a query from the power battery pack grouping automatic-optimization scheduling module and altering the grouping information of power batteries, and the power battery pack grouping automatic-optimization scheduling module for receiving a battery swapping scheduling command, obtaining a grouping strategy and calculated priorities from the grouping strategy library configuration module, obtaining operation data from the operation data database according to the requirements of the grouping strategy, determining the reasonability of the current battery grouping according to the grouping strategy, altering the existing grouping information not satisfying the grouping strategy, storing the altered grouping information in the battery grouping information database to form optimum grouped battery pack information, issuing a battery swapping operation command to an automated power battery pack swapping apparatus, and prompting no available battery group if no optimum grouped battery pack information is formed.

The automated power battery pack swapping apparatus is used for receiving the battery swapping operation command issued by the power battery pack grouping automatic-optimization scheduling module, performing a battery swapping operation and completing fetch and placement of power batteries between the electric vehicle and a charging rack.

The power battery information real-time processing module comprises a data acquisition module for acquiring the relevant information of the battery group removed from the electric vehicle, a data transmission module for transmitting the acquired relevant information to a data parsing and storage module, the relevant information including such information as battery voltage, capacity, charging current, internal resistance and charging time of each power battery, and the data parsing and storage module for receiving data transmitted from the data transmission module, completing such work as acquired data parsing, timestamp marking and data compression, and storing structured data to the operation data database.

The operation data database is used for serially storing the structured data from the data parsing and storage module, providing a data query interface for calling by the power battery pack grouping automatic-optimization scheduling module, and completing queries for 7 types of operation data, including power battery swapping times, charging curve, discharge curve, voltage before charging starting, voltage after charging completion, whole pack capacity after completion of battery pack charging, and internal resistance of an individual battery in a battery pack.

A working method of an automatic power battery pack grouping optimization system for an electric vehicle battery swap station comprises the following steps:
step (1): carrying out an equilibrium test to each power battery pack before the power battery pack is put into operation, matching battery packs according to test results, and recording matching information in a battery grouping information database;
step (2): acquiring such information as battery voltage, capacity, charging current, internal resistance and charging time of each power battery removed from an electric vehicle in real time, and transmitting, analyzing and storing the acquired information to an operation data database;
step (3): selecting one or more of optimum grouping strategies for permutation and combination for use in power battery pack grouping automatic-optimization scheduling, and completing configuration of grouping strategies and adjustment of priorities;
step (4): querying a grouping strategy, calculated priorities and grouping information of power batteries;
step (5): after receiving a battery pack swapping scheduling command by a power battery pack grouping automatic-optimization scheduling module, carrying out optimum grouping on battery packs according to the grouping strategy, and distributing grouping information to an automated power battery pack swapping apparatus; determining whether an optimum group of battery packs is formed; if yes, turning to a step (6); and if not, waiting for a next battery swapping process and returning to the step (3);
step (6): performing a battery swapping operation by the automated power battery pack swapping apparatus, and completing fetch and placement of power batteries between the electric vehicle and a charging rack;
step (7): circularly carrying out the step (3) to the step (6).

The step (2) specifically comprises the following steps:
step (2-1): removing the battery packs from the electric vehicle;
step (2-2): acquiring relevant information of power batteries of battery packs on a power battery charging rack and transmitting the acquired relevant information to a data parsing and storage module, wherein the relevant information includes such information as battery voltage, capacity, charging current, internal resistance and charging time of each power battery;
step (2-3): receiving data transmitted from the data transmission module, completing such work as acquired data parsing, timestamp marking and data compression, and storing structured data;
step (2-4): serially storing the structured data from the data parsing and storage module, providing a data query interface for calling by the power battery pack grouping automatic-optimization scheduling module, and completing queries for 7 types of operation data, including power battery swap times, charging curve, discharge curve, voltage before charging starting, voltage after charging completion, whole pack capacity after completion of battery pack charging, and internal resistance of an individual battery in a battery pack.

The step (3) specifically comprises the following steps:
step (3-1): initializing grouping strategy configuration;
step (3-2) selecting one or more from the optimum grouping strategies as basis for present automatically optimized grouping of battery packs;
step (3-3): adjusting priorities of the optimum grouping strategies according to actual requirements;
step (3-4): saving configuration information to the battery grouping information database.

The optimum grouping strategies in the step (3-2) include fewest times of battery packs taking part in battery swap, voltage deviation of all individual batteries in a battery pack lower than 2mV, shortest time of all charging completion, best goodness of fit of charging curve, best goodness of fit of discharge curve, closest internal resistance of individual battery in each battery pack, and shortest time of putting into operation.

The step (5) specifically comprises:
step (5-1): receiving the battery swapping scheduling command by the power battery pack grouping automatic-optimization scheduling module;
step (5-2): obtaining the operation data from the operation data database according to the grouping strategy;
step (5-3): determining reasonability of current battery grouping according to the grouping strategy, and performing re-optimized grouping on the existing grouping information not satisfying the grouping strategy;
step (5-4): storing altered grouping information in the battery grouping information database to form optimum grouped battery pack information;
step (5-5): distributing the grouping information to the automated power battery pack swapping apparatus, and prompting no available battery group if no optimum grouped battery pack information is formed.

The present invention has the following beneficial effects:
1. According to the present invention, a battery pack grouping strategy is configured reasonably, and operation data are obtained from the operation database according to the strategy for analysis, allowing dynamic adjustment of the grouping information of battery packs. As a result, the problem of shutdown of the whole group of batteries due to the change of individual performance is solved, and the utilization rate of power batteries is increased.
2. In the present invention, according to the grouping strategy and based on the operation data, automatic battery selection is performed by a computer system to ensure scientific charging and battery swapping scheduling for an electric vehicle, such that power batteries can operate for longer time while keeping high consistency, and the operation benefits of a battery swap station are improved.
3. Moreover, with the participation of the computer system, the selection time in battery grouping is shortened, and the working strength of a battery swapping scheduler is also reduced.

### Brief Description of the Drawings

Fig. 1 is a structural schematic diagram of the present invention;
Fig. 2 is a step diagram of an automatic optimization method of power battery pack grouping for an electric vehicle battery swap station;
Fig. 3 is a schematic diagram of a data acquisition and storage flow of the present invention;
Fig. 4 is a schematic diagram of a grouping strategy configuration flow of the present invention;
Fig. 5 is a schematic diagram of a grouping optimization flow of the present invention.

In the drawings, 1 represents a power battery information real-time processing module; 2 represents a grouping strategy library configuration module; 3 represents a battery grouping information database; 4 represents a power battery pack grouping automatic-optimization scheduling module; 5 represents an automated power battery pack swapping apparatus; 6 represents a data acquisition module; 7 represents a data transmission module; 8 represents a data parsing and storage module; 9 represents an operation data database.

### Detailed Description of the Embodiments

The present invention will be further described below in combination with the accompanying drawings and embodiments.

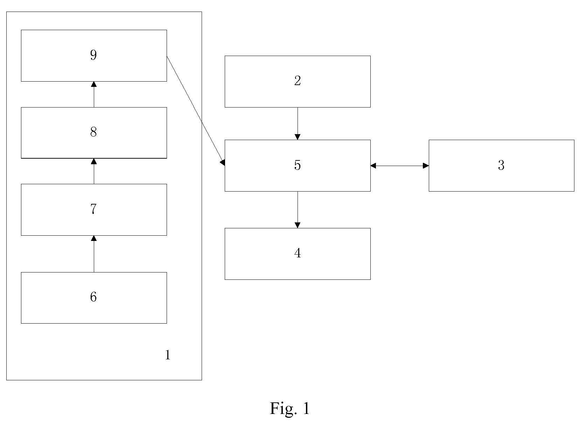

As shown in Fig. 1, an automatic power battery pack grouping optimization system for an electric vehicle battery swap station comprises a power battery information real-time processing module 1 for acquiring information of a battery group removed from an electric vehicle in real time, and transmitting, parsing and storing the acquired information to an operation data database 9, a grouping strategy library configuration module 2 for selecting one or more of optimum grouping strategies for permutation and combination for use by a power battery pack grouping automatic-optimization scheduling module 4, providing a grouping strategy configuration entry to the power battery pack grouping automatic-optimization scheduling module 4, providing a grouping strategy customizing interface and providing a priority altering interface for the optimum grouping strategies joining in scheduling, as well as completing configuration of grouping strategies and adjustment of priorities, a battery grouping information database 3 for recording grouping information of power battery packs, receiving a query from the power battery pack grouping automatic-optimization scheduling module 4 and altering the grouping information of power batteries, and the power battery pack grouping automatic-optimization scheduling module 4 for receiving a battery swapping scheduling command, obtaining a grouping strategy and calculated priorities from the grouping strategy library configuration module 2, obtaining operation data from the operation data database 9 according to the requirements of the grouping strategy, determining the reasonability of the current battery grouping according to the grouping strategy, altering the existing grouping information not satisfying the grouping strategy, storing the altered grouping information in the battery grouping information database 3 to form optimum grouped battery pack information, issuing a battery swapping operation command to an automated power battery pack swapping apparatus 5, and prompting no available battery group if no optimum grouped battery pack information is formed.

The automated power battery pack swapping apparatus 5 is used for receiving the battery swapping operation command issued by the power battery pack grouping automatic-optimization scheduling module 4, performing a battery swapping operation and completing fetch and placement of power batteries between the electric vehicle and a charging rack.

The power battery information real-time processing module 1 comprises a data acquisition module 6 for acquiring the relevant information of the battery group removed from the electric vehicle, a data transmission module 7 for transmitting the acquired relevant information to a data parsing and storage module 8, the relevant information including such information as battery voltage, capacity, charging current, internal resistance and charging time of each power battery, and the data parsing and storage module 8 for receiving data transmitted from the data transmission module, completing such work as acquired data parsing, timestamp marking and data compression, and storing structured data to the operation data database 9.

The operation data database 9 is used for serially storing the structured data of the data parsing and storage module 8, providing a data query interface for calling by the power battery pack grouping automatic-optimization scheduling module 4, and completing queries for 7 types of operation data, including power battery swapping times, charging curve, discharge curve, voltage before charging starting, voltage after charging completion, whole pack capacity after completion of battery pack charging, and internal resistance of an individual battery in a battery pack.

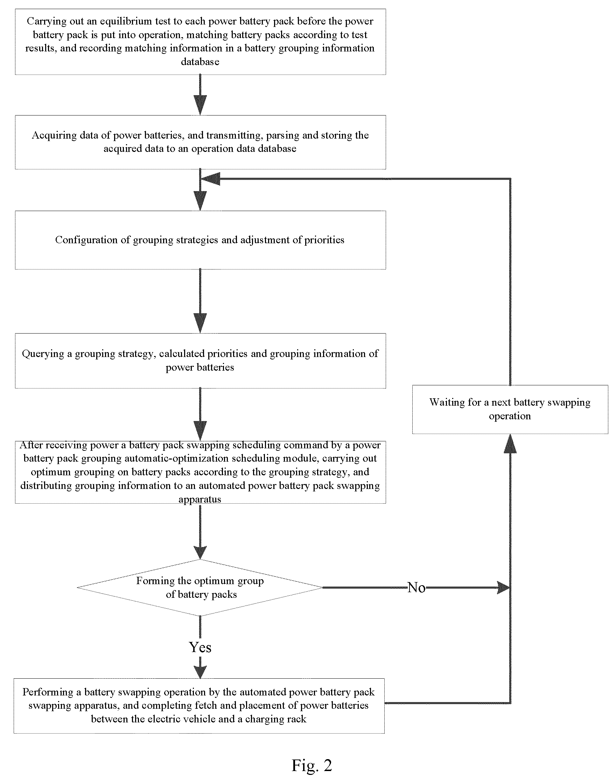

As shown in Fig. 2, a working method of an automatic power battery pack grouping optimization system for an electric vehicle battery swap station comprises the following steps:
step (1): carrying out an equilibrium test on each power battery pack by a computer before the power battery pack is put into operation, matching battery packs according to test results, and recording matching information in a battery grouping information database 3;
step (2): acquiring such information as battery voltage, capacity, charging current, internal resistance and charging time of each power battery removed from an electric vehicle in real time, and transmitting, parsing and storing the acquired information to an operation data database 9;
step (3): selecting one or more of optimum grouping strategies for permutation and combination for use by a power battery pack grouping automatic-optimization scheduling module 4, and completing configuration of grouping strategies and adjustment of priorities;
step (4): querying a grouping strategy, calculated priorities and grouping information of power batteries;
step (5): after receiving a battery pack swapping scheduling command by the power battery pack grouping automatic-optimization scheduling module 4, carrying out optimum grouping on battery packs according to the grouping strategy, and distributing grouping information to an automated power battery pack swapping apparatus 5;
step (6): performing a battery swapping operation by the automated power battery pack swapping apparatus 5, and completing fetch and placement of power batteries between the electric vehicle and a charging rack;
step (7): circularly carrying out the step (3) to the step (6).

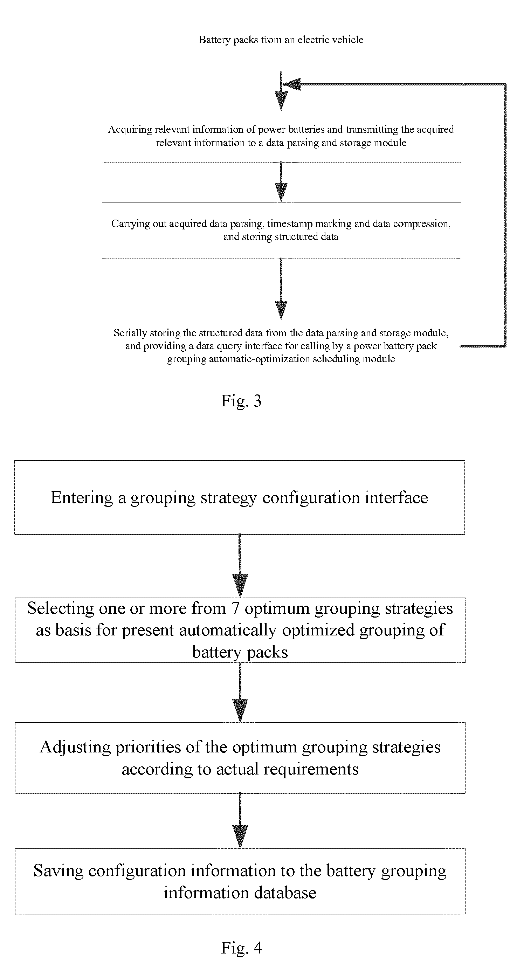

As shown in Fig. 3, the data acquisition and storage flow of the present invention is illustrated, which specifically comprises the following steps:
step (2-1): removing the battery packs from the electric vehicle;
step (2-2): acquiring relevant information of power batteries of battery packs on a power battery charging rack 6 and transmitting the acquired relevant information to a data parsing and storage module 8, the relevant information including such information as battery voltage, capacity, charging current, internal resistance and charging time of each power battery;
step (2-3): receiving data transmitted from the data transmission module 7, completing such work as acquired data parsing, timestamp marking and data compression, and storing structured data;
step (2-4): serially storing the structured data from the data parsing and storage module 8, providing a data query interface for calling by the power battery pack grouping automatic-optimization scheduling module 4, and completing queries for 7 types of operation data, including power battery swap times, charging curve, discharge curve, voltage before charging starting, voltage after charging completion, whole pack capacity after completion of battery pack charging, and internal resistance of an individual battery in a battery pack.

As shown in Fig. 4, the grouping strategy configuration flow of the present invention is illustrated, which specifically comprises the following steps:
step (3-1): entering a grouping strategy configuration interface;
step (3-2): selecting one or more from 7 optimum grouping strategies as basis for present automatically optimized grouping of battery packs;
step (3-3): adjusting priorities of the optimum grouping strategies according to actual requirements;
step (3-4): saving configuration information to the battery grouping information database 3.

The optimum grouping strategies in the step (3-2) includes fewest times of battery packs taking part in battery swap, voltage deviation of all individual batteries in a battery pack lower than 2mV, shortest time of all charging completion, best goodness of fit of charging curve, best goodness of fit of discharge curve, closest internal resistance of individual battery in each battery pack, and shortest time of putting into operation.

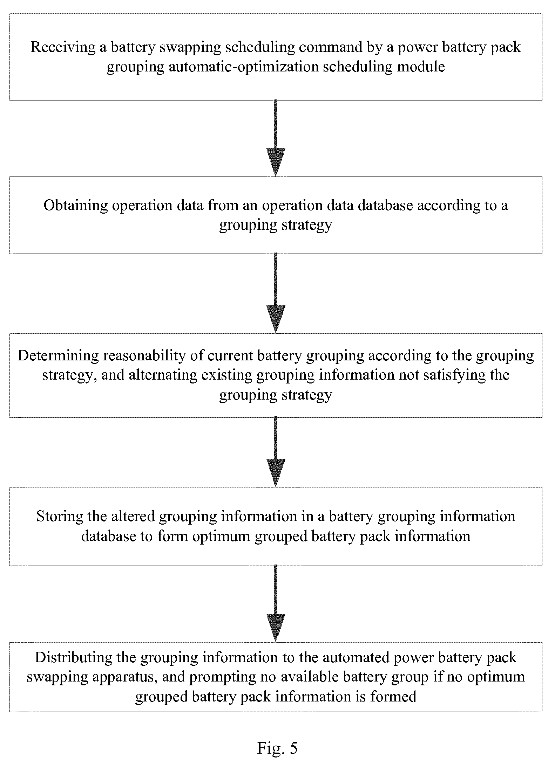

As shown in Fig. 5, the grouping optimization flow of the present invention is illustrated, which specifically comprises:
step (5-1): receiving the battery swapping scheduling command by the power battery pack grouping automatic-optimization scheduling module 4;
step (5-2): obtaining the operation data from the operation data database 9 according to the grouping strategy;
step (5-3): determining reasonability of current battery grouping according to the grouping strategy, and performing re-optimized grouping on the existing grouping information not satisfying the grouping strategy;
step (5-4): storing altered grouping information in the battery grouping information database 3 to form optimum grouped battery pack information;
step (5-5): distributing the grouping information to the automated power battery pack swapping apparatus 5, and prompting no available battery group if no optimum grouped battery pack information is formed.

While the specific embodiments of the present invention are described above in conjunction with the accompanying drawings, the protection scope of the present invention is not limited. Those skilled in the art should understand that various modifications or variations made by those skilled in the art without creative work still fall into the protection scope of the present invention.

## Claims

1. An automatic power battery pack grouping optimization system for an electric vehicle battery swap station, comprising:
a power battery information real-time processing module for acquiring information of a battery group removed from an electric vehicle in real time, and transmitting, parsing and storing the acquired information to an operation data database;
a grouping strategy library configuration module for selecting one or more of optimum grouping strategies for permutation and combination for use by a power battery pack grouping automatic-optimization scheduling module, providing a grouping strategy configuration entry to the power battery pack grouping automatic-optimization scheduling module, providing a grouping strategy customizing interface and providing a priority altering interface for the optimum grouping strategies joining in scheduling, as well as completing configuration of grouping strategies and adjustment of priorities;
a battery grouping information database for recording grouping information of power battery packs, receiving a query from the power battery pack grouping automatic-optimization scheduling module and altering the grouping information of power batteries;
the power battery pack grouping automatic-optimization scheduling module for receiving a battery swapping scheduling command, obtaining a grouping strategy and calculated priorities from the grouping strategy library configuration module, obtaining operation data from the operation data database according to the requirements of the grouping strategy, determining reasonability of current battery grouping according to the grouping strategy, altering the existing grouping information not satisfying the grouping strategy, storing the altered grouping information in the battery grouping information database to form optimum grouped battery pack information, issuing a battery swapping operation command to an automated power battery pack swapping apparatus, and prompting no available battery group if no optimum grouped battery pack information is formed, wherein
the automated power battery pack swapping apparatus is used for receiving the battery swapping operation command issued by the power battery pack grouping automatic-optimization scheduling module, performing a battery swapping operation and completing fetch and placement of power batteries between the electric vehicle and a charging rack.

2. The automatic power battery pack grouping optimization system for the electric vehicle battery swap station of claim 1, wherein the power battery information real-time processing module comprises:
a data acquisition module for acquiring the relevant information of the battery group removed from the electric vehicle;
a data transmission module for transmitting the acquired relevant information to a data parsing and storage module, the relevant information including such information as battery voltage, capacity, charging current, internal resistance and charging time of each power battery;
the data parsing and storage module for receiving data transmitted from the data transmission module, completing such work as acquired data parsing, timestamp marking and data compression, and storing structured data to the operation data database;
the operation data database is used for serially storing the structured data from the data parsing and storage module, providing a data query interface for calling by the power battery pack grouping automatic-optimization scheduling module, and completing queries for 7 types of operation data, including power battery swap times, charging curve, discharge curve, voltage before charging starting, voltage after charging completion, whole pack capacity after completion of battery pack charging, and internal resistance of an individual battery in a battery pack.

3. A working method of the automatic power battery pack grouping optimization system for the electric vehicle battery swap station of any one of the preceding claims, comprising the following steps:
step (1): carrying out an equilibrium test to each power battery pack before the power battery pack is put into operation, matching battery packs according to test results, and recording matching information in a battery grouping information database;
step (2): acquiring such information as battery voltage, capacity, charging current, internal resistance and charging time of each power battery removed from an electric vehicle in real time, and transmitting, parsing and storing the acquired information to an operation data database;
step (3): selecting one or more of optimum grouping strategies for permutation and combination for use in power battery pack grouping automatic-optimization scheduling, and completing configuration of grouping strategies and adjustment of priorities;
step (4): querying a grouping strategy, calculated priorities and grouping information of power batteries;
step (5): after receiving a battery pack swapping scheduling command by a power battery pack grouping automatic-optimization scheduling module, carrying out optimum grouping on battery packs according to the grouping strategy, and distributing grouping information to an automated power battery pack swapping apparatus; determining whether an optimum group of battery packs is formed; if yes, turning to a step (6); and if not, waiting for a next battery swapping process and returning to the step (3);
step (6): performing a battery swapping operation by the automated power battery pack swapping apparatus, and completing fetch and placement of power batteries between the electric vehicle and a charging rack;
step (7): circularly carrying out the step (3) to the step (6).

4. The method of claim 3, wherein the step (2) specifically comprises the following steps:
step (2-1): removing the battery packs from the electric vehicle;
step (2-2): acquiring relevant information of power batteries of battery packs on a power battery charging rack and transmitting the acquired relevant information to a data parsing and storage module;
step (2-3): receiving data transmitted from the data transmission module, completing such work as acquired data parsing, timestamp marking and data compression, and storing structured data;
step (2-4): serially storing the structured data from the data parsing and storage module, providing a data query interface for calling by the power battery pack grouping automatic-optimization scheduling module, and completing queries for 7 types of operation data, including power battery swap times, charging curve, discharge curve, voltage before charging starting, voltage after charging completion, whole pack capacity after completion of battery pack charging, and internal resistance of an individual battery in a battery pack.

5. The method of claim 3, wherein the step (3) specifically comprises the following steps:
step (3-1): initializing grouping strategy configuration;
step (3-2) selecting one or more from the optimum grouping strategies as basis for present automatically optimized grouping of battery packs;
step (3-3): adjusting priorities of the optimum grouping strategies according to actual requirements;
step (3-4): saving configuration information to the battery grouping information database.

6. The method of claim 5, wherein the optimum grouping strategies in the step (3-2) include:
fewest times of battery packs taking part in battery swap, voltage deviation of all individual batteries in a battery pack lower than 2mV, shortest time of all charging completion, best goodness of fit of charging curve, best goodness of fit of discharge curve, closest internal resistance of individual battery in each battery pack, and shortest time of putting into operation.

7. The method of claim 3, wherein the step (5) specifically comprises:
step (5-1): receiving the battery swapping scheduling command by the power battery pack grouping automatic-optimization scheduling module;
step (5-2): obtaining the operation data from the operation data database according to the grouping strategy;
step (5-3): determining reasonability of current battery grouping according to the grouping strategy, and performing re-optimized grouping on the existing grouping information not satisfying the grouping strategy;
step (5-4): storing altered grouping information in the battery grouping information database to form optimum grouped battery pack information;
step (5-5): distributing the grouping information to the automated power battery pack swapping apparatus, and prompting no available battery group if no optimum grouped battery pack information is formed.

8. The method of claim 3, wherein the relevant information in the step (2-2) includes such information as battery voltage, capacity, charging current, internal resistance and charging time of each power battery.
